Europäisches Patentamt

European Patent Office

Office européen des brevets

(19)

(11) Veröffentlichungsnummer: **0 260 692 B1**

(12) **EUROPÄISCHE PATENTSCHRIFT**

(45) Veröffentlichungstag der Patentschrift: **02.01.92**

(21) Anmeldenummer: **87113609.9**

(22) Anmeldetag: **17.09.87**

(51) Int. Cl.⁵: **B23Q 3/06**

(54) **Kurzhub-Werkzeugmaschine mit einem an einem Maschinengestell in vertikaler (Z-)Richtung verfahrbar gelagerten Bohr- und Frässpindelstock.**

(30) Priorität: **19.09.86 DE 3632319**

(43) Veröffentlichungstag der Anmeldung:
**23.03.88 Patentblatt 88/12**

(45) Bekanntmachung des Hinweises auf die
Patenterteilung:
**02.01.92 Patentblatt 92/01**

(84) Benannte Vertragsstaaten:
**AT BE CH DE ES FR GB IT LI NL SE**

(56) Entgegenhaltungen:
**WO-A-83/01027**
**DE-A- 2 021 993**
**FR-A- 2 284 400**

(73) Patentinhaber: **Otto Häfner GmbH & Co. KG**
**Jenfelder Strasse 30**
**W-2000 Hamburg 70(DE)**

(72) Erfinder: **Klumpp, Maximilian**
**Langenwiesen 26**
**W-2000 Hamburg 67(DE)**

(74) Vertreter: **Patentanwälte Wenzel & Kalkoff**
**Grubes Allee 26 Postfach 730466**
**W-2000 Hamburg 73(DE)**

EP 0 260 692 B1

## Beschreibung

Die Erfindung betrifft eine Kurzhub-Werkzeugmaschine mit einem an einem Maschinengestell in vertikaler (Z-)Richtung verfahrbar gelagerten Bohr- und Fräs-Spindelstock, mit einem in der horizontalen Ebene (in X- und Y-Richtung) verfahrbaren, einen Werkzeugträger bildenden Schlitten, der mindestens einen Spannstock zum Spannen eines Werkstückes trägt, und mit einer Zentrier-Spanneinrichtung zum zentrierenden Spannen des Werkstückes.

Bekannte, heute in der Praxis im Einsatz befindliche Kurzhub-Bohr- und Fräsmaschinen dieser Art dienen dem Bearbeiten relativ kurzer Werkstücke, deren Länge in der Regel die Abmessungen des Schlittens nicht übertrifft. Der Schlitten hat einen durch die Gestellgröße der Maschine begrenzten, relativ kurzen Arbeitshub und trägt zur Befestigung des Werkstückes alle dafür erforderlichen Spannvorrichtungen, also insbesondere Spannstock und/oder Schwenkfutter. Letzteres ist vor allem dann erforderlich, wenn Wellenstücke bearbeitet werden sollen. Das Schwenkfutter ist also zusammen mit dem Schlitten relativ zum Spindelstock verfahrbar. Um eine schnelle Auswechselung der am Spindelkopf zum Einsatz gelangenden Werkzeuge zum Bohren, Fräsen oder ähnlichen Bearbeitungsvorgängen zu ermöglichen, kann im Bereich des Spindelkopfes eine Werkzeug-Wechseleinrichtung vorgesehen sein, in der die für einen bestimmten Arbeitsablauf gewünschten Werkzeuge bereit gehalten werden. Solche Werkzeugwechsler sind heute in der Praxis bei den verschiedensten Typen von Kurzhub-Maschinen ebenfalls gang und gäbe.

Bei einer anderen Art von Kurzhub-Maschinen der eingangs beschriebenen Kategorie ist statt des bewegbaren Schlittens ein Maschinengestell-fester Werkstücktisch mit den erforderlichen Spannvorrichtungen vorgesehen. Zur Erreichung der verschiedenen Bearbeitungspositionen ist der Spindelkopf mit den Bearbeitungswerkzeugen - in aller Regel in der X- und Z-Achsrichtung - relativ zum Werkstücktisch verfahrbar. Hinsichtlich der Größe der zu bearbeitenden Werkstücke weisen auch diese Maschinen die gleichen Begrenzungen wie die anderen Kurzhub-Maschinen auf.

Um Werkstücke mit großer Längenerstreckung, also insbesondere lange Wellen von 2 m Länge bis hin zu 10 m oder auch darüber verarbeiten zu können, sind in der Praxis Langbett-Maschinen im Einsatz. Auf diesen wird das Werkstück stationär, d.h. ortsfest zum Maschinenbett, eingespannt, und der Spindelstock fährt von einer Bearbeitungsstelle zur nächsten. Mit anderen Worten muß eine Führung des Spindelstockes parallel zum Werkstück praktisch über die gesamte Länge der Maschine vorgesehen sein, was zu ganz erheblichen Erstellungs- und Wartungskosten führt. Um an solchen langen Werkstücken Bearbeitungen in verschiedenen Winkelpositionen im Verhältnis zur Z-Achse ausführen zu können, muß das Werkstück jeweils entsprechend gedreht oder umgespannt werden. Man ist, wie auch bei den Kurzhub-Maschinen, hinsichtlich der Länge des Werkstückes an die Bettlänge der Maschine gebunden. Bei dieser überschreitender Werkstücklänge muß das Werkstück jeweils nach Erreichen der Hublänge des Spindelstockes gelöst und neu justiert und gespannt werden. Dadurch entstehen verhältnismäßig lange Umrüstzeiten und folglich erhöhte Fertigungskosten.

Der Erfindung liegt demgegenüber die Aufgabe zugrunde, eine Möglichkeit zu schaffen, auf den eingangs beschriebenen Kurzhub-Werkzeugmaschinen beliebig lange, die Breitenabmessung der Maschine übertreffende und damit nicht in einer Aufspannung bearbeitbare Werkstücke, also solche mit gegenüber ihrem Durchmesser/ihrer Stärke und Höhe dominierender Längenerstreckung, insbesondere Wellen oder lange Profilteile, unter Reduzierung der erforderlichen Maschinen-Anschaffungskosten sowie der Rüstzeiten stufenweise bearbeiten zu können.

Diese Aufgabe wird erfindungsgemäß dadurch gelöst, daß die Zentrier-Spanneinrichtung relativ zum Spindelstock ortsfest dreh- und/oder schwenkbar am Maschinengestell gelagert und so angeordnet ist, daß bei im Spannstock eingespanntem Werkstück und bei gleichzeitig geöffneter Zentrier-Spanneinrichtung ein Durchgang für das Werkstück in X-Richtung erzielbar ist. Mit dieser Anordnung wird es in einfacher Weise möglich, durch extrem lange Werkstücke stufenweise durch eine vorzugsweise numerische Rechner-gesteuerte (CNC) Kurzhub-Maschine hindurchzubewegen und jeweils in dem Bereich des Spannstockes mittels des Spindelstockes entsprechend der Hublänge des Schlittens zu bearbeiten, während die Zentrier-Spanneinrichtung gelöst ist und einen Durchgang für das Werkstück freigibt, so daß dieses relativ zur Z-Achse entsprechend dem Schlittenhub bewegt werden kann. Das Werkstück wird außerhalb der Maschine in üblicher Weise auf Rollenbahnen oder ähnlichen Trag- und Stützelementen abgestützt, ohne daß es erforderlich wäre, ein Maschinenbett entsprechend den Dimensionen des Werkstückes vorzusehen und, wie bei Langbett-Maschinen üblich, das Werkzeug über die gesamte Maschinenlänge zu bewegen und zu führen. Ist die Hublänge des Schlittens erreicht, so wird die außerhalb des Schlittens am Maschinengestell gelagerte Zentrier-Spanneinrichtung gespannt, d.h. das Werkstück darin gehalten, während der oder die Spannstöcke das Werkstück freigeben, so daß der Schlitten zusammen mit dem Spannstock/den Spannstöcken entlang des Werkstückes bewegt werden kann, um in eine neue Ausgangsposition zu fahren und das von der Zentrier-Spanneinrichtung definiert gelagerte Werkstück in dieser erneut ebenso definiert zu spannen, worauf die Zentrier-Spanneinrichtung wieder gelöst wird und das Werkstück durch sie hindurchgezogen und bearbeitet werden kann. Dieser Vorgang ist praktisch beliebig oft wiederholbar, wobei sich das Werkstück ständig entweder durch die Spannstöcke und/oder die Zentrier-Spanneinrichtung in definierter Spannlage befindet. So können kontinuierlich entlang der Länge des Werkstükkes an dessen Umfang Paßnuten, Querbohrungen, Flächungen, Gewinde etc. spanabhebend angebracht werden. Dabei ist ein wesentlicher Vorteil, daß solche Kurzhub-Werkzeugmaschinen in den Herstellungs- und Betriebskosten erheblich günstiger als Langbett-Maschinen sind, abgesehen von ihrem gegenüber solchen Vorrichtungen erheblich geringeren Platzbedarf.

Um ein solches Bearbeiten auch in definierten, unterschiedlichen Winkelpositionen relativ zur Z-Achse, d.h. durch Drehung um die X-Achse, am Umfang vornehmen zu können, ist die Zentrier-Spanneinrichtung vorzugsweise ein Drehkopf-Spannfutter, in der Praxis auch als Schwenkspanner (-futter) bezeichnet, das bei Lösen des Spannstockes (der Spannstöcke) ein Drehen des Werkstückes um seine Längsachse mit hoher Präzision ermöglicht. Die Zentrier-Spanneinrichtung kann aber auch als ein in der Y-Z-Ebene in die X-Achse einschwenkbares Spannfutter vorgesehen sein; dies ist besonders dann von Vorteil, wenn das Werkstück Dickenabmessungen aufweist, die die üblichen Durchlaßabmessungen herkömmlicher, für die Wellenbearbeitung eingesetzter Drehkopf-Spannfutter übersteigen.

Obwohl, insbesondere für kürzere Werkstücke nicht zu hohen Gewichtes und bei entsprechender Dimensionierung des Spannstockes, für ein funktionsgemäßes Arbeiten der erfindungsgemäßen Maschine die Anordnung nur eines Spannstockes auf dem Werkstückträger-Schlitten ausreichen kann, ist es im Hinblick auf einen universellen Einsatz der Maschine und das besonders feste, sichere Spannen auch großer, schwerer und komplizierter Werkstücke zweckmäßig, wenn der Schlitten mindestens zwei Spannstöcke trägt, wobei natürlich auch eine höhere Anzahl solcher Spannstöcke in Betracht kommt, was ganz von den Dimensionen der Maschine, insbesondere des Schlittens abhängt.

Um an den langen Werkstücken auch eine Stirnflächenbearbeitung durch Bohren, Fräsen, Gewindebohren od.dgl. durchführen zu können, ist nach einer weiteren vorteilhaften Ausführungsform der Erfindung vorgesehen, daß an dem Spindelstock ein für sich bekannter Winkel-Bohr- oder Fräskopf anbringbar ist. Dieser kann in einer bei solchen Werkzeugmaschinen üblichen Werkzeug-Schnellwechseleinrichtung zusammen mit den übrigen Bearbeitungswerkzeugen vorrätig gehalten werden.

Insgesamt erhält man durch die Erfindung die Möglichkeit, beliebig lange Werkstücke auf von Platzbedarf und Fabrikationskosten her günstigen Kurzhub-Maschinen mit allen sich dadurch bietenden Vorteilen hinsichtlich der Bearbeitungsmöglichkeiten schnell, genau sowie zuverlässig und damit preiswert bearbeiten zu können.

Weitere Vorteile und Realisierungsmöglichkeiten der Erfindung gehen aus der folgenden Beschreibung des in der schematischen Zeichnung dargestellten Ausführungsbeispieles hervor. Es zeigt

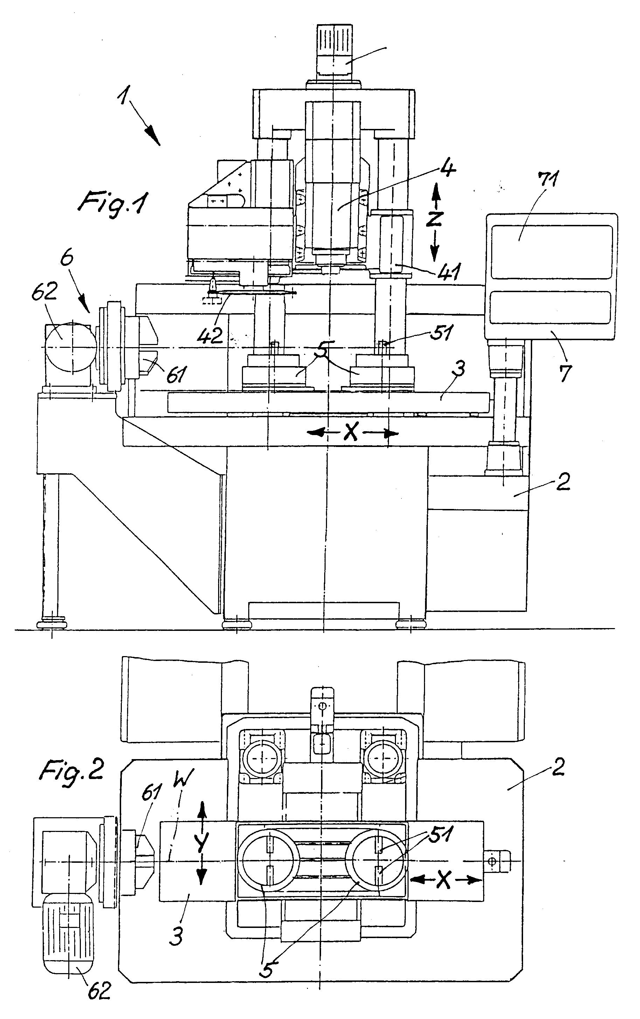

Fig. 1 eine Ansicht einer erfindungsgemäßen Kurzhub-Bohr- und Fräsmaschine und

Fig. 2 eine Draufsicht der Fig. 1.

Die erfindungsgemäße, in den Zeichnungen dargestellte Vorrichtung umfaßt im wesentlichen eine CNC-Kurzhub-Werkzeugmaschine 1, bei der es sich um eine Koordinaten-Bohr- und Fräsmaschine handelt. Diese umfaßt ein Maschinengestell 2, auf dem, in geeigneter Weise angetrieben, ein Werkstückschlitten 3 in den X- und Y-Koordinaten verfahrbar gelagert ist. Weiterhin trägt das Maschinengestell 2, über Säulenführungen 41 in der Z-Koordinate bewegbar und einen Motor 40 getrieben, einen Spindelstock 4, der der Aufnahme von Bohr-, Fräs- oder ähnlichen Bearbeitungswerkzeugen und dem Antrieb derselben zwecks Bearbeitung eines Werkstückes dient. Im Bereich des Spindelstockes 4 ist eine Werkzeugwechsel-Einrichtung 42 vorgesehen, die im Falle des Erfordernisses eines Werkzeugwechsels das benötigte neue Werkzeug bereit hält und das Werkzeug, mit dem der vorherige Bearbeitungsgang durchgeführt wurde, aufnimmt, so daß es bei nächster Gelegenheit wieder eingesetzt werden kann. Auf dem Werkstückschlitten 3 sind zwei Spannstöcke 5 in geeigneter, bekannter Weise lösbar festgesetzt, die mit ihren Spannbacken 51 ein nicht näher dargestelltes, lediglich durch die Achse W angedeutetes Werkstück auf dem Schlitten spannen. Ortsfest am Maschinengestell 2, also im Abstand zu dem Spindelstock 4 unveränderbar, ist eine Zentrier-Spanneinrichtung 6 gelagert, die hier die Form eines Drehkopf-Spannfutters 61 hat. Zum Antrieb dieser Einrichtung dient ein Motor 62. Die Steuerung (CNC) der Maschine erfolgt in einer für solche Koordinaten-Maschinen üblichen Weise über einen hier nur angedeuteten Rechner 7 mit Tasten-Eingabefeld für die Steuerbefehle und mit Display 71.

Die Wirkungsweise der erfindungsgemäßen Maschine ist wie folgt:

Ein langes Werkstück, beispielsweise eine lange Welle, wird von links her durch das geöffnete Drehkopf-Spannfutter 61 in die Maschine eingeschoben und durch die Spannbacken 51 der Spannstöcke 5 in der gewünschten Position festgelegt, d.h. gespannt. Nunmehr kann zunächst mit Hilfe eines hier nicht näher gezeigten Winkel-Bohr- und Fräskopfes eine Bearbeitung der freien Stirnfläche erfolgen. Sind die Arbeiten mit diesem Werkzeug beendet, so werden nacheinander jeweils gewünschte Bearbeitungen an dem Umfang der Welle durchgeführt, indem der Winkelkopf ausgetauscht und andere, gewünschte Bearbeitungswerkzeuge in den Spindelstock 4 eingesetzt werden. So können u.a. Flächungen und Paßnuten gefräst, Querbohrungen in der Welle vorgesehen und Gewinde geschnitten werden. Um die Bearbeitung an den jeweiligen Stellen vorzunehmen, wird der Schlitten entlang der X-Koordinate verfahren, wobei eine Bearbeitung im Bereich der durch den Schlitten bzw. dessen Bewegbarkeit vorgegebenen Dimensionen möglich ist. Ein Verfahren in der Y-Achse ist entsprechend der Öffnung des Drehkopf-Spannfutters 61, also des Freiganges des Werkstückes in diesem Spannfutter, möglich. Handelt es sich um ein Drei- oder Vierbackenfutter, so wird dieser Freigang in der Y-Achse nur wenige Millimeter bzw. allenfalls Zentimeter betragen, was jedoch normalerweise für die in Betracht kommenden Bearbeitungsvorgänge ausreicht. Soll insofern eine Verschiebbarkeit in weiteren Grenzen ermöglicht werden, so kann man das Drehkopf-Spannfutter 61 durch ein ein- und ausschwenkbares Spannfutter ersetzen, das zwar verschwenkbar ist, seinen Abstand zu dem Spindelstock 4 aber in Arbeitsposition ebenfalls konstant beibehält. Wenn alle in der durch die Spannstöcke 5 bestimmten Winkelstellung im Bereich des Hubes des Schlittens 3 möglichen Bearbeitungsvorgänge ausgeführt sind und möglicherweise in anderen Winkelstellungen zur Z-Achse weitere Bearbeitungen erfolgen sollen, so werden die Spannbacken 51 der Spannstöcke 5 nach Betätigung des Drehkopf-Spannfutters 61, also Spannen des Werkstückes in diesem Spannfutter, gelöst, woraufhin man über die Koordinatensteuerung 7 mit Hilfe des Drehkopf-Spannfutters eine andere gewünschte Winkellage durch Drehen des Werkstückes um die Achse W erreichen kann. Ist diese gewünschte Lage eingestellt, so werden die Spannbacken 51 erneut geschlossen, so daß das Werkstück wieder in den Spannstöcken 5 gehalten ist, während das Drehkopf-Spannfutter 61 gelöst wird, damit der Schlitten 3 in X- und/oder Y-Richtung verfahren werden kann. Sobald alle in diesem Längenbereich des Werkstückes W beabsichtigten Bearbeitungsvorgänge in der beschriebenen Weise ausgeführt sind, wird das Drehkopf-Spannfutter 61 geschlossen, so daß es das Werkstück W hält, woraufhin die Spannstöcke 5 vom Werkstück gelöst werden und der Schlitten 3 in seine äußerste linke Position verfahren wird. In dieser Position werden die Spannbacken 51 geschlossen. Das Drehkopf-Spannfutter 61 wird wieder gelöst, da jetzt das Werkstück in der richtigen Position erneut in den Spannstöcken 5 gehalten ist, und der Schlitten 3 wird nach rechts in Richtung der X-Koordinate verfahren, d.h. es wird durch das Drehkopf-Spannfutter 61 hindurch ein neuer Teil des langen Werkstückes in den Bearbeitungsbereich des Spindelstockes 4 gezogen. Über die Koordinaten-Steuereinrichtung 7 wird die gewünschte Bearbeitungsposition eingestellt. Der vorgehend beschriebene Vorgang kann erneut beginnen und, je nach Länge des Werkstückes, in einer entsprechenden Zahl von Schritten wiederholt werden.

Selbstverständlich ist das Werkstück außerhalb des Drehkopf-Spannfutters 61 und damit außerhalb der Maschine in geeigneter Weise gelagert, wofür Stützrollenbahnen, Lünetten od.dgl. in Betracht kommen.

**Patentansprüche**

1. Kurzhub-Werkzeugmaschine mit einem an einem Maschinengestell (2) in vertikaler (Z-)Richtung verfahrbar gelagerten Bohr- und Fräs-Spindelstock (4), mit einem in der horizontalen Ebene (in X- und Y-Richtung) verfahrbaren, einen Werkstückträger bildenden Schlitten (3), der mindestens einen Spannstock (5) zum Spannen eines Werkstückes trägt, und mit einer Zentrier-Spanneinrichtung (6) zum zentrierenden Spannen des Werkstückes, **dadurch gekennzeichnet,** daß die Zentrier-Spanneinrichtung (6) relativ zum Spindelstock (4) ortsfest dreh- und/oder schwenkbar am Maschinengestell gelagert und so angeordnet ist, daß bei im Spannstock (5) eingespanntem Werkstück und bei gleichzeitig geöffneter Zentrier-Spanneinrichtung (6) ein Durchgang für das Werkstück in X-Richtung erzielbar ist.

2. Werzeugmaschine nach Anspruch 1, **dadurch gekennzeichnet,**, daß die Zentrier-Spanneinrichtung ein Drehkopf-Spannfutter (61) ist.

3. Werkzeugmaschine nach Anspruch 1, **dadurch gekennzeichnet,** daß die Zentrier-Spanneinrichtung ein in der Y-Z-Ebene in die X-Achse einschwenkbares Spannfutter ist.

4. Werkzeugmaschine nach einem der Ansprüche 1 bis 3, **dadurch gekennzeichnet,** daß der Schlitten (3) mindestens zwei Spannstöcke (5) trägt.

**5.** Werkzeugmaschine nach einem der Ansprüche 1 bis 4, **dadurch gekennzeichnet,** daß an dem Spindelstock (4) ein Winkel-Bohr- oder Fräskopf anbringbar ist.

## Claims

**1.** Short-stroke machine tool with a boring (2) and milling spindle head (4) mounted on the machine frame for movement in the vertical direction (Z), with a carriage (3) forming a tool carrier moveable in the horizontal plane (in X and Y direction), the carriage supporting at least one clamping chuck (5) for clamping a workpiece, and with a centering clamping device (6) for clamping the workpiece centrally **characterised** in that the centering clamping device (6) is rotatably and/or pivotally mounted on the machine frame in a fixed position relative to the spindle head (4) and arranged in such a way that when the workpiece is clamped by the clamping chuck (5) and the centering clamping device (6) is open at the same time, a passage for the workpiece in the direction X is attainable.

**2.** Machine tool according to claim 1, **characterised** in that the centering clamping device is a rotary-head chuck (61).

**3.** Machine tool according to claim 1, **characterised** in that the centering clamping device is a clamping chuck which can be pivoted from the Y-Z plane into the X axis.

**4.** Machine tool according to one of the claims 1 to 3, **characterised** in that the carriage (3) supports at least two clamping chucks (5).

**5.** Machine tool according to one of the claims 1 to 4, **characterised** in that an angle boring or milling head can be attached to the spindle head (4).

## Revendications

**1.** Machine-outil à course de faible longueur, comportant une poupée d'alésage et de fraisage (4), logée de façon à pouvoir se déplacer dans une direction verticale (Z) sur un bâti de machine (2), comportant un coulisseau (3) formant porte-pièce, pouvant se déplacer dans le plan horizontal (directions X et Y), et portant au moins un étau (5) destiné à serrer une pièce ; et comportant un dispositif de serrage par centrage (6), destiné à serrer la pièce d'une manière centrée, caractérisée en ce que le dispositif de serrage par centrage (6) est logé sur le bâti de façon à pouvoir tourner et/ ou pivoter, en étant fixe par rapport à la poupée (4), et est disposé de façon à réaliser, quand une pièce est serrée dans l'étau (5) et que, simultanément, le dispositif de serrage par centrage (6) est ouvert, un passage pour la pièce dans la direction X.

**2.** Machine-outil selon la revendication 1, caractérisée en ce que le dispositif de serrage par centrage est un mandrin de serrage (61) à tête rotative.

**3.** Machine-outil selon la revendication 1, caractérisée en ce que le dispositif de serrage et de centrage est un mandrin de serrage pouvant, dans le plan Y-Z, se rabattre sur l'axe X.

**4.** Machine-outil selon l'une des revendications 1 à 3, caractérisée en ce que le coulisseau (3) porte au moins deux étaux (5).

**5.** Machine-outil selon l'une des revendications 1 à 4, caractérisée en ce qu'une tête d'équerre d'alésage ou de fraisage peut être rapportée à la poupée (4).

Fig.1

Fig.2